# EUROPEAN PATENT APPLICATION

(11) **EP 3 427 571 A1**
(43) Date of publication of application: **16.01.2019**
(21) Application number: 16883488.5
(22) Date of filing: 23.11.2016
(51) Int. Cl.: A01G 9/02, A01G 27/06

(54) **MOVABLE SELF-WATERING PLANTER**

(30) Priority: 08.01.2016 ES 201630010 U
(71) Applicant: Hobby-Flower De España, S.A., 08908 L'Hospitalet de Llobregat (Barcelona) (ES)
(72) Inventor: PARIS TERRE, Miquel, 08908 L'Hospitalet de Llobregat (ES)
(74) Representative: Ponti & Partners, S.L.P
(86) International application number: PCT/ES2016/070835
(87) International publication number: WO 2017/118769

(57) **Abstract**

The invention relates to a flowerpot with own irrigation means, which uses wicks distributed in the base of the tank to allow the moistening of the drainage and the soil, and of the plants situated above the drainage layer situated in a hole disposed in the soil layer above said drainage layer.

Specifically, this flowerpot has a body formed by two main parts, the flowerpot body comprising a tank without a base, and a removable base which incorporates removable wetting means, said flowerpot being particularized in that its body forms a single part with a tank without a base, which incorporates a base by way of a platform with wicks and it is pressure-coupled on the bent ridge of the tank, including in said body the handle rod and one or more aeration openings.

## Description

The invention is included in the field of flowerpots with own irrigation means, which use wicks distributed in the base of the tank to allow the moistening of the drainage and the soil, and of the plants situated above the drainage layer situated in a hole disposed in the soil layer above said drainage layer.

Another of the objects of the invention is the incorporation in said type of pots of means which allow their mobility and the controlled irrigation of the plants that contain said self-watering pot.

### Background of the invention

More specifically, the invention relates to a group of flowerpots that incorporate automatic irrigation means, colloquially called self-watering flowerpots.

Within the previous field, self-watering flowerpots thus called are known because the irrigation means incorporated in the flowerpot avoids the user from having to regularly water the plants contained in said flowerpot and in other cases avoids the death of the plant due to lack of irrigation.

In this field of flowerpots, it is typical that there is putrefaction of the irrigation means incorporated in the flowerpot, firstly due to lacking control of the available water inside the flowerpot in a simple and effective way and means for renewing the air contained in the water reservoir.

Another of the disadvantages is the design of the body of self-watering flowerpots, which has its origin in that most are monoblocks, so that replacement of certain parts subjected to use during a long time is practically impossible or very difficult, which makes it necessary to discard the entire self-watering pot.

Another of the problems in the state of the art is the problem of moving them, due to their great weight.

### Description of the invention

The purpose of the invention is to resolve the aforementioned problems and disadvantages, by substantial modifications in the structure of the body of self-watering flowerpots.

One of the purposes will be the possibility of easily changing the wetting means, and of general cleaning of the inside of the self-watering flowerpot.

Another of the purposes of the invention is to know at all times the volume of water available for the perpetual irrigation of the plants contained in the flowerpot in a simple and effective manner.

Another of the purposes of the invention is to give removable wheels to this type of flowerpots so that the aesthetics of the assembly is not harmed by incorporating said wheels, hiding their existence from the outside.

Unlike the known flowerpots which form part of the state of the art, the flowerpot body is formed by two main parts, the flowerpot body which comprises a tank without a base, and a removable base which incorporates removable wetting means.

As secondary but characteristic parts of the invention, there is the disposal of aeration means of the reservoir water, and of control means of the available water.

The main body of the self-watering flowerpot is formed by a body of a single part whose outer part coincides with the piece of furniture of the self-watering flowerpot, whilst internally said body is a tank open at its base with appreciably inverted truncated cone-shaped configuration, and the lower end of which is slightly above the desirable water level.

To close the tank, it ends in its lowermost part with a bent ridge, which allows coupling, with no type of tool, a removable base by way of a platform equipped with orifices, which fits in the fastening ridge of the tank, said platform or base with orifices provided therein allow the longitudinal disposal of wicks along the upper part and the location of the same wicks along the lower part forming loops which are submerged in the water contained in the flowerpot body.

The design of the flowerpot base has cavities especially designed to be able to house the wheels concealing them, without them being visible from the outside, and without which said base of the self-watering flowerpot is separated from the floor of the room wherein the flowerpot is located making it less attractive with its presence.

According to another of the characteristics of the invention, between the tank and the flowerpot body the upper part thereof has an orifice for the location of an indicator rod of the reservoir water level, allowing that said orifice, when the rod is not therein, can serve to fill the corresponding reservoir with water.

According to another of the characteristics of the invention, the side surface of the flowerpot body has one or more aeration openings of the water reservoir, avoiding the loss in quality thereof and consequently that of irrigation of the drainage and soil layers and roots of the plant.

Other details and characteristics shall be revealed in the course of the description given below, wherein reference is made to the drawings which accompany this specification, wherein it shows, by way of illustration but not limitation, a graphic representation of the invention, which can be put into practice in any type of materials suited to measurements and colours.

### Brief description of the figures

There follows a list of the different parts of the invention, which are identified by numbers in the drawings: 10 self-watering flowerpot, 11 flowerpot body 10, 11a tank, 11b bent ridge, 12 handle, 13 cavities, 14 base, 14a notch, 14b perimeter, 15 aeration openings, 16 orifice, 17 wicks, 17a upper part of the wick 17, 17b lower part of the wick 17, 18 water reservoir 19, 19 wick through-orifice 17, 20 wheels, 21 rod, 21a rod end 21, 22 notches, 23 base of the body 11.
Figure 1 is an elevational cross-section of the body 11 of the flowerpot 10, the inside of which forms a whole with said body 11, a tank 11a and in the lower part thereof, the bent ridge 11b.
Figure no. 2 is a partially sectional exploded perspective view of the body 11 of the flowerpot 10, wherein the base 14 of the tank 11a is raised and above the body 11 of the flowerpot 10, with the wicks 17 housed in the orifices 16.

### Description of a preferred embodiment

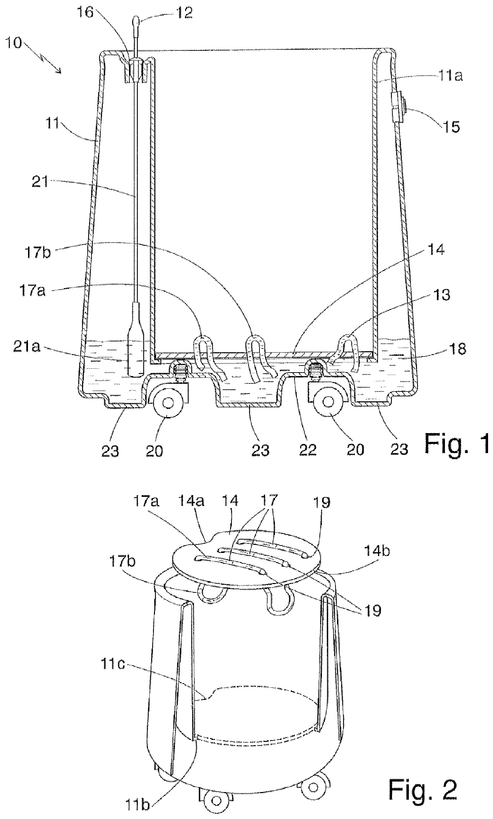

In one of the preferred embodiments of the invention, as can be seen in figures 1 and 2, the flowerpot 10 has a body 11 by way of truncated cone-shaped surface or similar, inside of which the tank 11a is located forming a whole with the body 11, the lower end of said tank 11a is the circular bent ridge 11b.

The volume delimited between the body 11 and the tank 11a, coincides with the water reservoir 18 the water level of which is controlled thanks to a rod 21 with a handle 20 with inlet 16 in the upper part of said body 11, and the lower end 21a of the rod 21 wets the surface free of the water contained in the reservoir 18.

As can be seen in figure no. 2, the base 14 of the tank 11a has been designed in order to being removable, i.e. its perimeter 14b coincides with the perimeter of the ridge 11b of the tank 11a and guarantees the separation between the soil plus the plant and the water contained in the reservoir 18.

For the purpose to facilitate the fitting of the base 14 in the ridge 11b, there exists a preferred position for the fitting of the base 14, thanks to having provided in said perimeter 14b a notch 14a, which coincides with a projection 11 c, provided in said ridge 11b and which guarantees in this way that the base 14 is correctly placed in the bent ridge 11b.

To remove the base 14, it is necessary to push downwards 14, and the concavity of the tank 11a surface enables the progressive sliding downwards of 14 to said bent ridge 11b, the notch 14a fitting together with the projection 11c, with the base 14 being perfectly placed in the body 11 of the self-watering flowerpot 10.

The base 14 has an array of orifices 19 to secure the wicks 17, so that there is an upper part of the wicks 17a above the base 14 and a lower part of the wicks 17b in the form of loops in permanent contact with the reservoir 18 water, as can be seen in figure 1.

This simple arrangement of the body 11 and base 14 forming part of the self-watering flowerpot 10, enables, when changing the type of plant for reasons of convenience or as it has died, taking out the soil layer and the drainage layer, removing the base 14 replacing the wicks 17 in the case that they are damaged by damp, and placing new ones, and again moving the base 14 until the bent ridge 11b of the body 11. Re-introducing a drainage layer over the wicks 17 and a soil layer on said drainage layer, manually leaving a cavity for each plant which is to be planted in the self-watering flowerpot 10.

Another of the characteristics of the invention is that which enables resolving the moving of the self-watering flowerpots 10, but without damaging their look and their decorative function, so that the lower base 23 of the body 11 is separated from the floor by a few millimetres, which is all achieved thanks to notches 22 provided in said base 23 which delimit cavities 13, the height of which allows concealing inside 13 the wheels 20, necessary to bear the weight of the self-watering flowerpot 10 in working position and be able to move it 10, without the need for raising the body 11 with the load of drainage, soil and water, all without altering, as previously explained, the aesthetics of the self-watering flowerpot 10 since the height of said cavities 13 and notches 22 allows concealing the wheels 20 without exposing their presence.

Another of the characteristics of the invention is the provision of means to know at all times the water level inside the reservoir 18, which comprises an orifice 16 wherein a handle 12 rod 21 fits, the end 21a of which is immersed in the water, so that the user knows if the water must be replaced.

Another of the characteristics of the invention is anticipating the water quality, which in conventional self-watering flowerpots ends up deteriorating due to lack of suitable aeration of the water contained in the corresponding reservoir, which is resolved with aeration orifices 15 provided in the body 11 of the self-watering flowerpot 10, situated 15 in the upper part of said body 11.

Having sufficiently described the present invention in correspondence with the attached figures, it is easy to understand that any modifications of detail deemed convenient can be made therein, with the necessary measures in each case in accordance with the requested stresses, and of materials that allow said stresses, provided that the essential nature of the invention, which is summarized in the following claims, is not altered.

## Claims

1. Mobile self-watering flowerpot with a body which conceals the tank, disposing between said tank and the body of the self-watering flowerpot a volume by way of water reservoir, **characterized in that** the body (11) of the self-watering flowerpot (10) forms a single part with a tank (11a) without a base, which (11a) incorporates a base (14) by way of a platform with wicks (17) and it is pressure-coupled on the bent ridge (11b) of the tank (11a), including in said body (11) the handle (12) rod (21) and one or more aeration openings (15).

2. Mobile self-watering flowerpot, according to claim 1, **wherein** the body (11) of the self-watering flowerpot (10) has a truncated cone-shaped configuration the same as the tank (11a), with the self-watering flowerpot (10) and the tank (11a) forming a single body and with the lower perimeter of said tank (11a) having a bent ridge (11b).

3. Mobile self-watering flowerpot according to claim 1, **wherein** the removable base (14) fits in the bent ridge (11b), with the base (14) having an array of orifices (19) wherein wicks (17) are coupled.

4. Mobile self-watering flowerpot according to the preceding claim, **wherein** the wicks (17), occupy the upper part (17a) a higher position in the base (14), and the lower part (17b) occupy by way of loops a position lower than the base (14).

5. Mobile self-watering flowerpot according to claims 1 and 3, **wherein** the fitting of the base (14) in the bent ridge (11b) is secured thanks to having provided in said perimeter (14b) a notch (14a), which coincides with a projection (11c), provided in said ridge (11b).

6. Mobile self-watering flowerpot according to claim 1, **wherein** the volume delimited by the body (11) and the tank (11a) coincides with the water reservoir (18), the water level of which is controlled thanks to a rod (21) with inlet (16) in the upper part of said body (11), and the lower end (21a) of which of the rod (21) wets the free surface of the water contained in the reservoir (18).
